# EUROPEAN PATENT APPLICATION

(11) **EP 3 902 337 A1**
(43) Date of publication of application: **27.10.2021**
(21) Application number: 20171209.8
(22) Date of filing: 23.04.2020
(51) Int. Cl.: H04W 52/02, H04W 72/04, H04W 8/22

(54) **DYNAMIC RESOURCE LIMITATION OF COMMUNICATION DEVICES IN WIRELESS NETWORKS**

(71) Applicant: Koninklijke Philips N.V., 5656 AG Eindhoven (NL)
(72) Inventor: GONZALEZ TEJERIA, Jesus, 5656 AE Eindhoven (NL); DEES, Walter, 5656 AE Eindhoven (NL); RAMACHANDRAN, Vignesh Raja Karuppiah, 5656 AE Eindhoven (NL)
(74) Representative: Philips Intellectual Property & Standards

(57) **Abstract**

The present invention relates to a system that limits resources (e.g. reduces energy consumption and/or peak-to average power ratio) of a wireless communication device by limiting communication resources for the communication device from a network function of the cellular core network.

## Description

### FIELD OF THE INVENTION

The invention relates to resource control of communication devices (e.g. terminal devices or user equipments (UEs)) in wireless networks, such as - but not limited to - cellular networks.

### BACKGROUND OF THE INVENTION

Many wireless communication systems use network access devices (such as base stations, Node Bs (eNBs, eNodeBs, gNBs, gNodeBs, ng-eNBs, etc.), access points or the like) to provide geographical service areas where wireless communication devices (e.g. terminal devices such as mobile stations or UEs) communicate with an access device serving a particular geographical service area in which the terminal devices are located.

In a radio access network (RAN), such as used for accessing a cellular network, access devices should schedule radio resources (e.g. time-frequency blocks) for transmission for all communication devices to obtain maximum efficiency of spectrum resource usage. In particular, since radio frequency resources are considered an expensive utility.

The growing pervasiveness of connected communication devices has brought multiple challenges. Some of these communication devices are constrained by the amount of energy and peak currents they can deliver, either because they are powered by batteries or because they were designed as such. These low-power communication devices have found their place in many wireless standards, in particular, cellular standards for Internet of Things (IoT) applications.

However, power-constrained communication devices with small batteries might not be able to deliver required energy for their lifetime. Likewise, these confined communication devices may typically have a small battery that is not able to supply surged current peaks required for transmission, especially when the communication device is operating at maximum transmit power. In view of this, further optimizations are required to enhance performance of such power-constrained or confined communication devices, such as body-worn wearable devices.

### SUMMARY OF THE INVENTION

It is an object of the present invention to provide a resource control procedure by which the performance of power-constrained or confined communication devices in wireless networks can be improved.

This object is achieved by interrelated apparatuses as claimed in respective claims 1, 5, 8 and 10 that complement each other, by methods as claimed in respective claims 12, 13, 14 and 15 performed at interrelated objects that complement each other.

According to a first aspect, an apparatus (e.g. offering or operating an exposure function of a wireless network) of a cellular core network is provided for exposing parameter configurations of wireless network to another device external to the cellular core network, wherein the apparatus is configured to receive a request for a radio resource limitation for at least one target communication device from the other device, and to select an upper bound limit for at least one radio resource parameter of the at least one target communication device based on the request for radio resource limitation according to which radio resources for the at least one target communication device are to be scheduled.

According to a second aspect, an apparatus (e.g. at an API invoker or at another device external to the cellular core network) is provided for invoking an exposure function exposing parameter configurations of a wireless network, wherein the apparatus is configured to generate a request for a radio resource limitation of at least one target communication device and to send the request to the exposure function to request the radio resource limitation of the at least one target communication devices via the exposure function, and wherein the request for radio resource limitation indicates at least one radio resource parameter according to which radio resources for the at least one target communication device are to be scheduled.

According to a third aspect, an apparatus (e.g. at a session and/or mobility management function or an access device of the wireless network) is provided for scheduling radio resources for at least one target communication device of a wireless network, wherein the apparatus is configured to receive a request for upper bound limits of at least one radio resource parameter of the at least one target communication device from an exposure function via a cellular core network of the wireless network, to validate resulting values of the at least one radio resource parameters requested by the exposure function, and to decide about discarding resulting values of the at least one radio resource parameters requested by the exposure function or rejecting the request received from the exposure function or conveying information about the upper bound limits to the at least one target communication devices, based on a result of the validation.

According to a fourth aspect, an apparatus (e.g. at a communication device of the wireless network) is provided for controlling at least one radio resource parameter at a communication device of a wireless network, wherein the apparatus is configured to receive upper bound limits of the at least one radio resource parameter from an exposure function via a cellular core network of the wireless network, to detect a restriction of the at least one radio resource parameter based on the received upper bound limits, and to reduce or compress uplink data to be transmitted or postpone transmission of uplink data in accordance with the detected restriction.

According to a fifth aspect, a method of limiting radio resources of at least one target communication device of a wireless network is provided (the method performed at e.g. an exposure function of the wireless network), wherein the method comprises receiving a request for a radio resource limitation for the at least one target communication device from another device external to a cellular core network of the wireless network, and selecting an upper bound limit for at least one radio resource parameter of the at least one target communication device based on the request for radio resource limitation, according to which radio resources for the target communication device are to be scheduled.

According to a sixth aspect, a method of limiting radio resources of at least one target communication device of a wireless network is provided (the method performed at e.g. an API invoker of the wireless network or another device external to the cellular core network), wherein the method comprises generating a request for a radio resource limitation of the at least one target communication device and sending the request to an exposure function of the wireless network to request the radio resource limitation of the at least one target communication device via the exposure function, and wherein the request for radio resource limitation indicates at least one radio resource parameter according to which radio resources for the at least one target communication device are to be scheduled.

According to a seventh aspect, a method of limiting radio resources of at least one target communication device of a wireless network is provided (the method performed at e.g. a session and/or mobility management function or an access device of the wireless network), wherein the method comprises receiving a request for upper bound limits of at least one radio resource parameter of the at least one target communication device from an exposure function via a cellular core network of the wireless network, validating resulting values of the at least one radio resource parameter requested by the exposure function, and deciding about discarding resulting values of the at least one radio resource parameters requested by the exposure function or rejecting the request received from the exposure function or conveying information about the upper bound limits to the at least one target communication devices based on a result of the validation.

According to an eighth aspect, a method of limiting radio resources of at least one target communication device of a wireless network is provided (the method performed at e.g. a communication device of the wireless network), wherein the method comprises receiving upper bound limits of the at least one radio resource parameter from an exposure function via a cellular core network of the wireless network, detecting a restriction of the at least one radio resource parameter based on the received upper bound limits, and reducing or compressing uplink data to be transmitted or postponing transmission of uplink data in accordance with the detected restriction.

Finally, according to a ninth aspect, a computer program product is provided, which comprises code means for producing the steps of the above methods according to the fifth to eighth aspects when run on a computer device.

Throughout the present disclosure, the term "session and/or mobility management function" is intended to cover any network device or function responsible for at least one of session and mobility management of the wireless network, which may include - among others - managing access network and mobility of communication devices, establishing bearer paths for communication devices, activating/deactivating bearers, selecting a serving gateway for a communication device at an initial joining stage and at a time of handover, authenticating users, generating and allocating of temporary identities to communication devices, verifying authorization of communication devices, indicating roaming restrictions, providing a termination point in the network for ciphering/integrity protection, handling the security key management, controlling mobility between different types of access networks, and/or controlling other network elements. Examples of the session and/or mobility management function are a service GPRS support node (SGSN) in 2G/3G cellular core networks, a mobility management entity (MME) in 4G networks and at least one of a session management function (SMF) and an access and mobility management function (AMF) in 5G networks.

It is noted that the above apparatuses of the first to fourth aspects and the methods of the fifth to eighth aspects relate to respective interrelated objects, devices, products or methods that complement each other or work together to solve the above object.

Accordingly, performance of power-constraint or confined communication devices can be reduced by limiting uplink radio resource parameters of target communication devices. Exposing via the exposure function at least one (maximum) radio resource parameter that a communication device can use allows a more fine grained control of power-constraint or confined communication devices and in this way extend the battery life of communication devices with small batteries, and freeing up radio resources to maintain communication with more communication devices than would otherwise be possible (due to insufficient information that would be available at the communication device and access devices to perform the necessary radio resource parameter limitation/adaptation), leading to less barring and refused connections and improved quality of service.

According to a first option which can be combined with any of the above first to ninth aspects, a request for creation, update or deletion of the selected upper bound limit of the at least one radio resource parameter may be sent to the session and/or mobility management function of the cellular core network or an access device of the wireless network. Thereby, upper bound limits of target communication devices can be controlled via a request from an external device (e.g. an API invoker). Furthermore, by providing limitation information for resource scheduling to the session and/or mobility management function or the access device, possibly less radio resources need to be scheduled, freeing up valuable radio resources for other device. In one particular example, a target communication device may have a built-in limit on the maximum number of repetitions for sending a message, in case of failing to deliver the message, before giving up. This number may be less than what is specified for the number of repetitions for e.g. NB-IoT and LTE-M. An access device that is not made aware of this limitation in number of repetitions, will therefore schedules uplink resources for the target communication device that will not be used, and hence were unnecessarily blocked from use by other communication devices.

According to a second option which may be combined with the first option or any of the above first to ninth aspects, the selected upper bound limit of the at least one radio resource parameter of the at least one communication device may be exposed to the other device. This ensures that upper bound limits set for target communication devices can be monitored and controlled via an external device (e.g. an API invoker), if necessary.

According to a third option which may be combined with the first or second option or any of the above first to ninth aspects, the resource limitation request received from the external device (e.g. API invoker) may be validated and it may be decided about discarding values of one or more resource parameters or rejecting the resource limitation request in response to a result of the validation. This measure provides the advantage that a resource limitation requested via the external device (e.g. an API invoker) is checked as to its compliance with provisions applied in or set for the wireless network.

According to a fourth option which can be combined with any of the first to third options or any of the above first to ninth aspects, the request for radio resource limitation may be sent in response to at least one of a geographical area in which the target communication device resides, a detection of at least one of the remaining battery level of the target communication device being below a predetermined threshold, a network congestion in the coverage area of the target communication device being above a predetermined threshold, a signal quality parameter of the target communication device being below a predetermined threshold, an extended coverage mode being enabled or disabled at the target communication device, a number of repetitions at the target communication device or communication failures that occurred in the radio access network being above a predetermined threshold, a barring of the target communication device from setting up a radio access connection or packet data unit session, and a target communication devices moving at a velocity above a predetermined threshold. Thereby, a fast automatic resource limitation can be provided for conditions needing short-term reaction.

According to a fifth option which can be combined with any of the first to fourth options or any of the above first to ninth aspects, the request for radio resource limitation may be generated in the form of a query, a creation, an update or a deletion of the at least one radio resource parameter for the at least one target communication device. Thereby, enhanced control of radio resource parameters at communication devices can be provided.

According to a sixth option which can be combined with any of the first to fifth options or any of the above first to ninth aspects, limited radio resources may be scheduled in accordance with the received request for upper bound limits for the at least one target communication device. Thus, the resource limitation requested by the external device (e.g. API invoker) can be used to control a resource scheduling function implemented in the wireless network.

According to a seventh option which can be combined with any of the first to sixth options or any of the above first to ninth aspects, the at least one radio resource parameter may correspond to a modulation coding scheme (MCS), a number of physical resource blocks (PRBs) or sub-PRBs, a transmit power, a transmit frequency or subset of bands, or a number of repetitions of uplink transmissions.

According to a ninth option which can be combined with any of the first to seventh options or any of the first to ninth aspects, at least one condition under which the upper bound limit for the at least one radio resource parameter of the at least one target communication device are selected may be received e.g. from the other device external to the cellular core network. Examples of such conditions may be:
a) a remaining battery level of the target communication device being below a predetermined threshold;
b) a network congestion in a coverage area of the target communication device being above a predetermined threshold;
c) at least one signal quality parameter at the target communication device being below a predetermined threshold;
d) an extended coverage mode being enabled or disabled;
e) a number of repetitions at the target communication device or communication failures that occurred in the radio access network being above a predetermined threshold;
f) a geographical area in which the target communication device resides;
g) whether or not the target communication device is being barred from setting up a radio access connection or packet data unit (PDU) session;
h) whether or not the target communication device is performing an emergency communication session;
i) whether or not a relay communication device for relaying an upstream or downstream transmission between the target communication device and the wireless network is in vicinity of the target communication device;
j) whether or not a visiting public land mobile network (PLMN) supports the same radio capabilities (e.g. support for the same radio resource parameters (incl. sub-PRB scheduling support, modulation coding scheme etc.), support for particular sleep timers and values, support for cellular IoT (CIoT) in its radio access network as the home PLMN for the target communication device;
k) a time interval during which the request for resource limitation shall apply; and
l) a target communication device moving at a velocity above a predetermined threshold.

Thus, setting an upper bound limit to the MCS or the number of physical resource blocks (PRBs) or sub-PRBs can lead to a decrease of peak-to-average power rate (PAPR) and block error rate (BER) of the at least one target communication device, making the radio communication more robust and paving the way for more compact batteries with less stringent requirements. In the same way, further restricting the maximum number of repetitions of uplink transmissions e.g. within a standardized range may avoid unnecessary repetitions and thereby extend battery lifetime of the communication device. Similarly, setting up a transmit power limitation to apply in the transmit power control loop has direct effect on reducing the PAPR. A maximum transmit frequency or subset of bands can reduce the time required for scanning, hence, reducing the demand of energy from the communication device; in turn, the lower the maximum transmit frequency or subset of bands the greater the coverage, reducing the required transmit power and thereby extending the battery lifetime of the communication device.

It is noted that the above apparatuses may be implemented in their respective network devices or functions based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatuses of claim 1, 5, 8 and 10, the methods of claims 12 to 15, and the computer program product of claim 16 may have similar and/or identical preferred embodiments, in particular, as defined in the dependent claims.

It shall further be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 schematically shows a network architecture with an exposure function for exposing network services and capabilities; and
Fig. 2 schematically shows a signaling and processing diagram of a resource limitation procedure according to various embodiments.

### DETAILED DESCRIPTION OF EMBODIMENTS

Embodiments of the present invention are now described based on a radio resource limitation function for cellular networks with an exposure function.

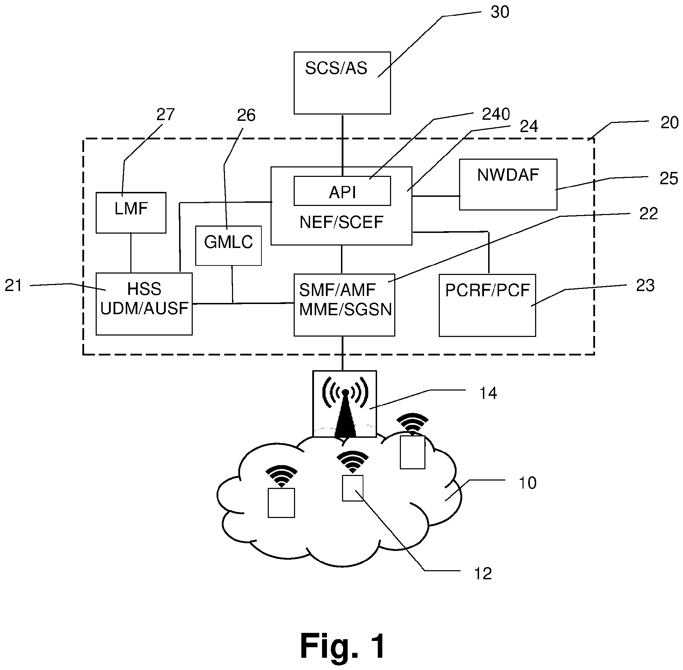

Fig. 1 schematically shows an architecture of a cellular network with an exposure function for exposing network services and capabilities according to various embodiments. It is however noted that network components and functions that are not required to understand the following disclosure have been omitted for brevity reasons.

A radio access network (RAN) 10 provides an interface to network functions in a cellular core network (CN) 20. The RAN 10 is part of a wireless communication network. It implements a radio access technology. Conceptually, it resides between a plurality of communication devices 12 (such as mobile phones, computers, IoT devices or any remotely controlled machine) and provides connections to its CN 20. The CN 20 is the cellular network's core part, which offers numerous services to customers or applications interconnected via the RAN 10. More specifically, it directs communication streams over the communication network and possibly other networks.

The RAN 10 comprises at least one access device (e.g. a base station or NodeB (eNB or gNB)) 14 which is connected to the CN 20.

The CN 20 comprises a plurality of network functions. Such network functions may include - among others - a session and/or mobility management function 22 (e.g. a mobility management entity (MME) in 4G cellular core networks or a service General Packet Radio Services (GPRS) support node (SGSN) in 2G/3G cellular core networks or at least one of a session management function (SMF) and an access and mobility management function (AMF) in 5G cellular core networks) which serves the communication devices 12 in providing mobility and session management. More specifically, the session and/or mobility management function 22 is a key control node for the RAN 10. It may be responsible for paging and tagging procedures including retransmissions and may be involved in bearer activation/deactivation and may be responsible for choosing a serving gateway (SGW, not shown) for a communication device 12 at an initial attach and at time of a handover involving CN node relocation. It may further be responsible for authenticating a user and for generation and allocation of temporary identities to communication devices 12. It also provides control plane function for mobility between different access networks.

Furthermore, a policy and charging rules function (PCRF) or policy control function (PCF) 23 provides quality of service information for specific traffic types, including e.g. charging rules, flow control rules and traffic priority.

Moreover, a network data analytics function (NWDAF) 25 may be provided for collecting data from the different network functions in the CN 20 and on-demand provisioning of analytics to consumers (e.g. as specified in 3GPP specification TS 23.501 and TS 23.288).Additionally, a subscriber database (e.g. a home subscriber server (HSS) or unified data management (UDM) or authentication server function (AUSF)) 21 stores customer profile data and generates authentication vectors used by the session and/or mobility management function 22 for subscriber authentication.

In addition, a gateway mobile location center (GMLC) 26 may be provided for supporting location-based services (e.g. as specified in 3GPP specification TS 23.271 and TS 23.273). It may request routing information from the subscriber database 21.

Also, a location management function (LMF) 27 may be provided for determining a current location of a communication device 12 based on information from the communication device 12 or the RAN 10 and providing it on request (e.g. as specified in 3GPP specification TS 23.273).

In order to facilitate access to services and capabilities of the cellular network, an exposure function 24 is provided. The exposure function 24 exposes services and capabilities of the cellular network via an application programming interface (API) 240 to an API invoker 30 or another device external or internal to the CN 20 and hides the underlying cellular network topology from the API invoker 30. Thereby, the API invoker 30 is securely isolated from the internal nodes of the CN 20.

An API is a software intermediary that allows two or more applications to exchange functions or data, essentially allowing software to "talk" to each other. The API 240, which is defined e.g. in 3GPP specification TS 29.122 and TS 29.522 and may be called "Northbound" API or "T8" allows the API invoker 30 (e.g. an IoT server) to access capabilities and services of the cellular network.

In an embodiment, the exposure function 24 may be implemented by a service capability exposure function (SCEF) in 4G networks or by a network exposure function (NEF) in 5G networks. The SCEF and the NEF may be used for exposing evolved packet system (EPS) or 5G system (5GS) services and their network parameter configurations. Thereby, radio resource parameters can be made available via the T8 interface of the SCEF or a Nnef interface of the NEF, as examples of the API 240. These interfaces will commonly be available to the public or under a service level agreement (SLA) with a network operator.

The NEF extends the functionality offered by the SCEF both towards a trust domain of a Public Land Mobile Network (PLMN) and towards the API invoker 30. As described in 3GPP specification TS 23.501, the external exposure can be categorized as monitoring capability (e.g. monitoring, detecting, reporting, or configuring specific events), provisioning capability (e.g. allowing an external party to provision information, such as expected UE behaviour or network parameter configuration), policy/charging capability, and analytics reporting capability. These capabilities can be requested and used by internal network functions of the PLMN trust domain but also by third applications (e.g. application functions (AFs)).

The API invoker 30 can suggest parameter values for maximum latency, maximum response time and suggested number of downlink packets. These parameters may influence certain aspects of a behaviour of the communication devices 12, such as their power saving mode (PSM) timer, or periodic registration timer, or active timer, or extended connected timer for mobile initiated connection only (MICO), or a discontinuous reception (DRX) with extended idle mode. The time that a communication device 12 remains in PSM and/or extended DRX has a great impact on the energy consumption of the communication device.

As an example, the API invoker 30 may be a device management platform that is deployed and controlled by a network operator or it may be a services platform that is deployed by a third party that has a business relationship with the network operator. The interfaces that connect the exposure function 24 to the internal nodes of the CN 20 are termed "Southbound" interfaces.

More specifically, the API invoker 30 may be a service capability server (SCS) or an application server (AS), as described e.g. in the 3GPP specification TS 29.122, which uses the API 240 to access the capabilities and services of the cellular network. 3GPP specification TS 23.682 specifies how the SCEF (as an example of the exposure function 24 in 4G networks) interacts with the SCS/AS (as an example of the API invoker 30 in 4G networks). Likewise, for 5G networks, 3GPP specification TS23.501 specifies the capabilities exposed by the NEF (both externally and internally) and TS23.502 specifies the interaction with the AF.

Hereinafter, the SCS/AS or AF will be denoted as API invoker 30 unless otherwise stated. Likewise, the SCEF or NEF entities will be referred as network functions.

In general, as indicated by Parseval's theorem, the energy of a signal can be calculated by summing the power-per-sample across time or spectral power across frequency. Such summing in the frequency domain has a direct correlation with the energy. Therefore, the lower the bandwidth the lower the energy.

As an example, Orthogonal Frequency Division Multiplexing (OFDM) systems are characterized by high peak-to average power rate (PAPR). A large PAPR appears as a consequence of the multicarrier OFDM signal nature. Namely, adding all carriers together can result in high maximum peak power, which can further increase with the number of carriers. For signals having large PAPR, a problem may appear during amplification at the transmitter. High signal values can be nonlinearly amplified due to the small dynamic range of the amplifier, which will cause signal distortions. In order to avoid distortions, the mean signal power should be decreased, which then leads to a high power consumption and a low amplifier efficiency.

The high PAPR associated with OFDM signals triggered a search for a different modulation scheme for uplink communication. As a result, Single Carrier OFDM (SC-FDMA) was chosen since it combines the low PAPR techniques of single-carrier transmission systems with the multipath resistance and flexible frequency allocation of OFDMA. Despite of the better PAPR achieved by SC-FDMA, it has been demonstrated that the higher the modulation coding scheme (MCS) or physical resource blocks (PRBs) used by the communication device 12 the higher the PAPR (cf. M. AL-Imari, M. A. Imran and R. Tafazolli, "Low Density Spreading for next generation multicarrier cellular systems," 2012 International Conference on Future Communication Networks, Baghdad, 2012).

According to various embodiments, it is suggested to expose e.g. maximum radio resource parameters that a communication device 12 can use via network function(s) to allow a more granular control of low power communication device. E.g., by setting an upper bound limit to an MCS or a number of physical resource blocks (PRBs) or sub-PRBs of the communication device 12, the PAPR and/or block error rate (BER) may decrease, making the radio communication more robust and paving the way for more compact batteries with less stringent requirements.

Similarly, setting up a transmit power limitation to apply in the transmit power control loop has direct effect on reducing the PAPR. A maximum transmit frequency or subset of bands can reduce the time required for scanning, hence, reducing the demand of energy from the communication device 12; in turn, the lower the maximum transmit frequency or subset of bands the greater the coverage, reducing the required transmit power and thereby extending the battery lifetime of the communication device.

In the same way, further restricting the maximum number of repetitions (e.g. within the 3GPP standardized range) may avoid unnecessary repetitions and extend the battery lifetime of the device. A different approach to prolong the battery lifetime of the device is to constrain the maximum throughput or data rate a communication device 12 can utilize. On this basis, the communication device 12 might decide to accommodate the data to be sent to meet the imposed throughput or data rate.

The API invoker 30 might become aware, for example, that a particular communication device 12 is running out of battery and might decide to set upper bound limits of one or more resource parameters via a respective network function until the battery is recharged or replaced. Likewise, the API invoker 30 can set upper bound limits to one or more resource parameters when the condition (e.g. state of charge) of the battery can no longer deliver current peaks over a certain threshold. Other conditions for setting upper bound limits of one or more resource parameters may be a geographical area in which the particular communication device 12 resides, or a network congestion in the coverage area of the particular communication device 12 being above a predetermined threshold, or poor signal quality conditions at the particular communication device 12, or that an extended coverage mode is enabled or disabled at the target communication device, or that the number of repetitions is above a predetermined threshold; or that the particular communication device 12 is barred from setting up a radio access connection or packet data unit session, or that the particular communication device 12 is moving at a velocity above a predetermined threshold, or a time interval during which the request for resource limitation shall apply.

Furthermore, a company may have an SLA with an operator whereby the communication devices of the company are not barred if they stay below a certain amount of resources during congested situations. The API invoker 30 may then decide to set upper bound limits of one or more radio resource parameters via a respective network function until the congestion in the area is reduced. This way, the communication devices can still send some data without having a large impact on the network.

According to various embodiments, based on a corresponding request of the API invoker 30 or another event, the exposure function 24 is configured to transmit a selected upper bound limit of one or more radio resource parameters (e.g. modulation coding scheme, physical resource blocks (PRBs) or sub-PRBs, number of repetitions, maximum transmit power, maximum transmit frequency or subset of bands) of at least one target communication device 12 to the session and/or mobility management function 22 which then informs the access device 14 of the selected upper bound limit. Based on the received selected upper bound limit, the access device 14 schedules correspondingly limited radio resources for the target communication device 12.

As an additional or alternative option, the session and/or mobility management function 22 or the access device 14 may inform the target communication device 12 of the selected upper bound limit when appropriate, and the target communication device 12 applies the selected upper bound limit in its communication with the access device 14.

Thus, according to various embodiments, a system capable of reducing energy consumption and PAPR of a cellular communication device 12 is proposed, wherein the exposure function 24 is configured to expose upper bound limits of one or more radio resource parameters of a communication device 12. The radio resource parameters might be at least one of a modulation coding scheme (MCS), physical resource blocks (PRBs) or sub-PRBs, throughput or data rate, number of repetitions, maximum transmit power, maximum transmit frequency or subset of bands.

The exposure function 24 is further configured to authenticate the API invoker 30, allow the query, creation, deletion or update requests of one or more resource parameters of one or more target communication devices 12 or one or more groups of target communication devices 12.

Additionally, the exposure function 24 may receive from the API invoker 30 at least one condition under which the upper bound limit for the at least one radio resource parameter of the at least one target communication device is selected e.g. from the API invoker 30. One or more of these conditions may be evaluated by the exposure 24 or forwarded to the session and/or mobility management function 22. Furthermore, the API invoker 30 may evaluate at least some of these conditions e.g. as to their applicability in the wireless network.

Examples of such conditions may be a remaining battery level of the target communication device 12 being below a predetermined threshold; or a network congestion in a coverage area of the target communication device 12 being above a predetermined threshold; or at least one signal quality parameter at the target communication device 12 being below a predetermined threshold; or an extended coverage mode being enabled or disabled; or a number of repetitions at the target communication device 12 or communication failures that occurred in the RANN 10 being above a predetermined threshold; or a geographical area in which the target communication device 12 resides; or whether or not the target communication device 12 is being barred from setting up a radio access connection or packet data unit (PDU) session; or whether or not the target communication device 12 is performing an emergency communication session; or whether or not a relay communication device for relaying an upstream or downstream transmission between the target communication device 12 and the wireless network is in vicinity of the target communication device 12; or whether or not a visiting public land mobile network (PLMN) supports the same radio capabilities (e.g. support for the same radio resource parameters (incl. sub-PRB scheduling support, modulation coding scheme etc.), support for particular sleep timers and values, support for cellular IoT (CIoT) in its RAN as the home PLMN for the target communication device 12; or a time interval during which the request for resource limitation shall apply; or the target communication device 12 moving at a velocity above a predetermined threshold.

As a further option, the exposure function 24 may be configured to validate values of one or more radio resource parameters requested by the API invoker 30 and/or discard values of one or more radio resource parameters sent by the API invoker 30 and/or reject a request sent by the API invoker 30.

As a still further option, the exposure function 30 may be configured to translate an information received from the API invoker 30 into a corresponding information sent to and understood by the internal cellular core network 20.

The above enhanced features of the exposure function 30 may be implemented e.g. by extending the 3GPP standardized SCEF or NEF or any other functional element which provides a means to expose services and capabilities of the cellular core network 20.

According to various embodiments, the API invoker 30 (which may be an SCS/AS, or AF or third party application) may be configured to interact with the API 240 exposed by the exposure function 24, wherein the interaction may further comprise at least one of supporting the authentication imposed by the exposure function 24, obtaining an authorization to interact with the API 240, discovering information of the API 240, and any other capability that might be required to interact with the network function.

Furthermore, the API invoker 30 needs to be able to invoke the API 240, which involves at least one of being capable of querying values of one or more radio resource parameters of one or more target communication devices 12 or one or more groups of target communication devices 12 via the exposure function 24, or being capable of creating new values of one or more radio resource parameters of the one or more target communication devices 12 or the one or more groups of target communication devices 12 via the exposure function 24, or being capable of deleting upper bound restrictions of one or more radio resource parameters of the one or more target communication devices 12 or the one or more groups of target communication devices 12 via the exposure function 24, or being capable of requesting modifications of the values of one or more radio resource parameters the one or more target communication devices 12 or the one or more groups of target communication devices 12 via the exposure function 24 or being capable of signaling at least one of the above exemplary conditions to the exposure function.

The API invoker 30 may be located within a PLMN trust domain, or within a third party trust domain or outside of both the PLMN trust domain and the third party trust domain.

According to various embodiments, the session and/or mobility management function 22 (which may be an SMF, AMF or MME/SGSN) may be configured to be capable of at least one of validating that the values of one or more radio resource parameters requested by the exposure function 24 are within a range specified by the standard and/or internal policies of a network operator, or discarding values of one or more radio resource parameters requested by the exposure function 24, or rejecting a request sent by the exposure function 24, or formatting, if required, information received from the exposure function 24 according to a format used by the one or more target communication devices 12 or the one or more groups of target communication devices 12, or conveying the information to the corresponding one or more target communication devices 12 or the one or more groups of target communication devices 12, or informing the exposure function 24 of the applied values of one or more radio resource parameters of the one or more target communication devices 12 or the one or more groups of target communication devices 12, or applying conditions received from the exposure function 24 together with upper bound limit(s) of the one or more radio resource parameters.

According to various embodiments, the access device 14 (which may be an eNB or a gNB) may be configured to be capable of at least one of receiving upper bound limits of one or more radio resource parameters for the one or more target communication devices 12 or the one or more groups of target communication devices 12 from the session and/or mobility management function 22, or sending the upper bound limits of one or more radio resource parameters when the one or more target communication devices 12 or the one or more groups of target communication devices 12 ask for uplink resources. Furthermore, the access device 14 may be configured to receive at least some of the above conditions for applying the upper bound limits, such as the number of repetitions or barring of the target communication device 12.

According to various embodiments, the communication device 12 (which may be a UE) may be configured to be capable of at least one of taking into account the upper bound limits of one or more radio resource parameters sent by the access device 12 or the session and/or mobility management function 22, or detecting the restriction of one or more radio resource parameters and consequently reducing or compressing data to be transmitted or postponing a communication.

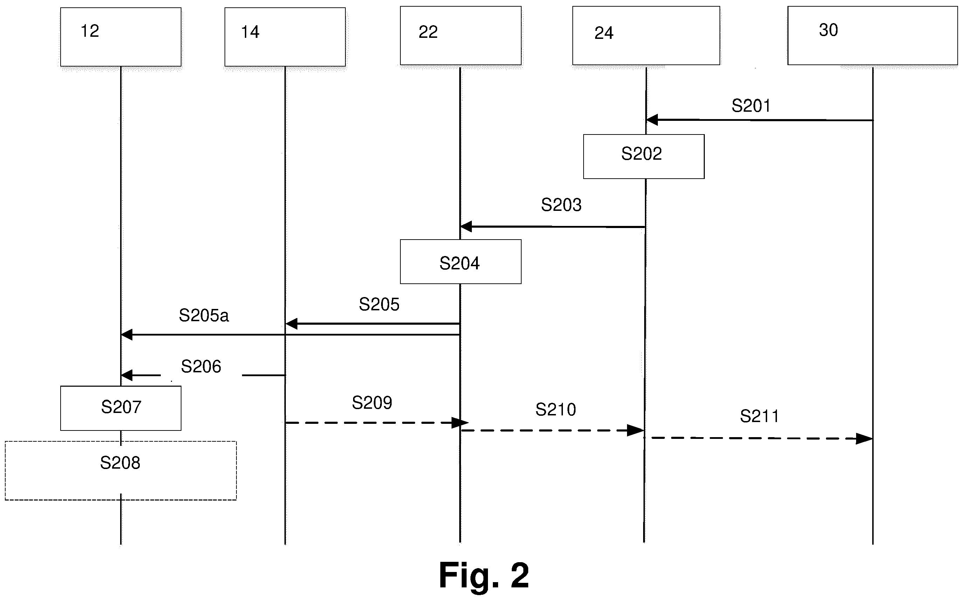

Fig. 2 schematically shows a signaling and processing diagram of a radio resource allocation procedure according to various embodiments, by which radio resource parameters are conveyed from the API invoker 30 to one or more target communication devices 12 or the one or more groups of target communication devices 12. In Fig. 2, horizontal arrows indicate transmissions of information between devices indicated by boxes at the top of the diagram and blocks below the boxes of the respective devices indicate processing steps or procedures of the device located above the respective block. The time proceeds in the vertical direction from the top to the bottom of the diagram.

In step S201, the API invoker 30 sends a radio resource parameter request in the form of query, creation, update or deletion of one or more resource parameters for a target communication device 12 or group of target communication devices 12 to the exposure function 24. The exposure function 24 assigns a unique identifier to the request. The API invoker 30 may need to authenticate itself against the exposure function 24 before sending the request.

The API invoker 30 may send the radio resource parameter request in response to at least one of a geographical area in which the target communication device 12 resides, a detection of at least one of the remaining battery level of the target communication device 12 being below a predetermined threshold, a network congestion in the coverage area of the target communication device 12 being above a predetermined threshold, a signal quality parameter of the target communication device 12 being below a predetermined threshold, an extended coverage mode being enabled or disabled at the target communication device 12, a number of repetitions at the target communication device 12 or communication failures that occurred in the RAN 10 being above a predetermined threshold, a barring of the target communication device 12 from setting up a radio access connection or packet data unit session, and the target communication devices 12 moving at a velocity above a predetermined threshold. If the API invoker 30 is not authorized to perform the request or it is malformed, the exposure function 24 responses with an error and the process jumps to a final step S211. Otherwise, the exposure function 24 checks in step S202 whether upper bound limit/s of the requested radio resource parameter/s are within the range defined by the specification and/or operator policies. If one or more of the radio resource parameters are not within range, then, the exposure function 24 may either reject the request by jumping to step S211 and providing a response that indicates which radio resource parameter/s are out of range, discarding the value/s of the radio resource parameter/s that are out of range and proceeding with the flow, or select different value/s with different upper bound limit/s that are in range and proceed with flow.

If the exposure function 24 decides in step S202 on using upper bound limit/s for the radio resource parameters provided in step S201, that are different to the ones provided by the API invoker 30, then the API invoker 30 is informed of it in the final step S211. If the request sent by the API invoker 30 is a query operation, the exposure function 24 replies the value/s with the upper bound limit/s of the requested radio resource parameter/s in the final step S211. If required, the exposure function 24 may translate the value/s with the upper bound limit/s of the radio resource parameter/s to internal value/s understood by the network. Then, in step S203, the exposure function sends the creation or update or deletion request for one or more radio resource parameters with their upper bound limit/s of the target communication device 12 or the group of target communication devices 12 and related optional conditions to the session and/or mobility management function 22.

In the next step S204, the session and/or mobility management function 22 further verifies the value/s of the radio resource parameter/s for the target communication device 12 or the group of target communication devices 12 and may perform formatting translations to the value/s. The session and/or mobility management function 22 takes into consideration the upper bound limit/s of the radio resource parameter/s sent by the network function but may apply stricter values if required. In addition, the session and/or mobility management function 22 may store the value/s of the radio resource parameter/s for the target communication device 12 or the group of target communication devices 12. For each requested target communication device 12, in case one or more of the radio resource parameters are not valid, then, the session and/or mobility management function 22 may either reject the request for that target communication device 12 by jumping to step S210 and providing a response that indicates which radio resource parameter/s are invalid or discard the value/s of the radio resource parameter/s that are invalid and proceed with the flow. The session and/or mobility management function 22 may also reject the request due to other reasons and send the response to the network function in step S210.

Furthermore, if present, the optional conditions may be evaluated in step S204 as follows:
a) To evaluate whether a remaining battery level of the target communication device 12 is below a predetermined threshold, required information may be sent to the session and/or mobility management function 22 by the target communication device 12 using NAS messages or may be forwarded via an RRC message received by the access device 14 to the session and/or mobility management function 22. An example of such a message could be the UE capabilities message. The condition can be expressed e.g. as a percentage or as an absolute value (such as mAh) or as a string denoting the state of the battery (i.e. high, medium, low)
b) To evaluate whether a network congestion in a coverage area of the target communication device 12 is above a predetermined threshold, required information may be known to the session and/or mobility management function 22 or may be retrieved from the NWDAF 25 in 5G systems (as specified e.g. in 3GPP TS 23.502) or from an RCAF (RAN Congestion Awareness Function) for 4G systems (as specified e.g. in 3GPP TS 23.682). The threshold could be expressed e.g. as a percentage of the congestion level or a number related to the congestion level range attribute value pair (AVP).
c) To evaluate whether a signal quality parameter at the target communication device 12 is below a predetermined threshold, required information may be available in the session and/or mobility management function 22 or from the RAN domain or may be retrieved from the NWDAF 25 in 5G systems (as specified e.g. in 3GPP TS 23.502). An example of the signal quality parameter may be a reference signal received power (RSRP) and the threshold can be represented e.g. as a number in dBm units.
d) To evaluate whether an extended coverage mode is enabled or disabled, required information may be available in the session and/or mobility management function 22. The extended coverage mode condition may also be expressed e.g. as a level denoted by a number.
e) To evaluate whether a number of repetitions at the target communication device 12 is above a predetermined threshold or communication failures occurred in the RAN 10, required information may be forwarded by access device 14. This condition may be expressed e.g. as a number or as an error code.
f) To evaluate a geographical area in which the target communication device 12 resides, required information may be available in the session and/or mobility management function 22 in case it is responsible for the target communication device 12 or may be retrieved from the GLMC 26 in 2G/3G/4G systems (as specified e.g. in 3GPP specification TS 23.271) or from the LMF 27 in 5G systems (as specified e.g. in 3GPP specification TS 23.273). This condition could be expressed e.g. as a set of coordinates denoting an area or for example a distance to a reference position or civil address.
g) To evaluate whether or not the target communication device 12 is barred from setting up a radio access connection or packet data unit (PDU) session, required information may be known by the access device 14 and/or the session and/or the mobility management function 22. This condition can be expressed e.g. as a boolean value or as a string denoting a barring reason or code
h) To evaluate whether or not the target communication device 12 is performing an emergency communication session, required information may be known by the session and/or mobility management function 22. The condition can be expressed e.g. as a boolean value.
i) To evaluate whether or not a relay communication device for relaying an upstream or downstream transmission between the target communication device 12 and the wireless network is in the vicinity of the target communication device 12, required information may be available in the session and/or mobility management function 22 or a proximity services (ProSe) function (as specified e.g. in 3GPP specification TS 23.303). The condition could be expressed e.g. as a boolean value or as a number of discovered relay communication devices or as a distance between the target communication device 12 and the relay communication devices or as a signal quality between the target communication device 12 and the relay communication devices
j) To evaluate whether or not a visiting public land mobile network (PLMN) supports the same radio capabilities (e.g. support for the same radio resource parameters (incl. sub-PRB scheduling support, modulation coding scheme etc.), support for particular sleep timers and values, support for control plane CIoT (cellular IoT) optimizations for hand-off control, support for early data transmission, etc.) in its radio access network as the home PLMN for the target communication device 12, required information may be available in the session and/or mobility management function 22 or in in the subscriber database 21. The condition may be expressed e.g. as a boolean value or set of boolean values or a set of values related to each of these capabilities.
k) To evaluate a time interval during which the request for resource limitation shall apply, required information may be retrieved from the exposure function 24. It can be expressed e.g. as a start time and an end time or as start time and a duration.
l) To evaluate the velocity of the target communication device 12, required information can be retrieved from the GLMC 26 in 2G/3G/4G systems (as specified e.g. in 3GPP specification TS 23.271) or from the LMF 27 in 5G systems (as specified e.g. in 3GPP specification TS 23.273). This condition may be expressed e.g. as km/h or as specified in 3GPP specification TS 23.032.

Then, in step S205, the session and/or mobility management function 22 may forward the value/s of the radio resource parameter/s with their upper bound limit/s for the target communication device 12 or the group of target communication devices 12 and related optional conditions to the access device 14 depending on the layer at which the radio resource parameter/s are limited.

In an alternative step S205a, the session and/or mobility management function 22 may directly send the value/s of the radio resource parameter/s with their upper bound limit/s to the target communication device 12 or the group of target communication devices 12 or may wait until the affected target communication devices 12 require an uplink connection. In case the value/s of the radio resource parameter/s with their upper bound limit/s are not immediately pushed to the target communication device 12 or the group of target communication devices 12, the session and/or mobility management function 22 replies to the network function in step S210

In the next step S206, the access device 14 receives and stores the value/s of the radio resource parameter/s with their upper bound limit/s of the target communication device 12 or the group of target communication devices 12. When one of the affected target communication devices 12 requires uplink resources, the access device 14 applies and sends the new defined upper bound limits to the one affected communication device 12 requesting uplink resources. After the value/s of the radio resource parameter/s of the target communication device 12 or the group of target communication devices 12 are stored in the access device 14, the access device 14 immediately replies to the session and/or mobility management function 22 in step 209. The optional conditions may also be sent to the access device 14 using a configuration update command for the target communication device 12, for example as part of a policy.

In step S207, the target communication device 12 adapts its communication to the received upper bound limits for one or more radio resource parameters.

In an optional step S208, if the received upper bound limits for one or more radio resource parameters are more constricting, the target communication device 12 may reduce or compress the data to be sent in order to satisfy the new upper bound limits. The target communication device 12 may also decide to postpone the communication. If the received upper bound limits for one or more radio resource parameters are lifted or less restrictive, the target communication device 12 may resume the normal communication pattern.

In step S209, the access device 14 replies to the session and/or mobility management function 22 confirming that the value/s of the radio resource parameter/s with their upper bound limit/s of the target communication device 12 or the group of target communication devices 12 are stored and will be applied when the target communication device 12 or the group of target communication devices 12 require uplink resources.

In the next step S210, the session and/or mobility management function 22 sends a response to the exposure function 24. This response may contain accumulated responses in case more than one target communication device 12 was addressed by the API invoker 30. If the session and/or mobility management function 22 accepted the creation or update request for the target communication device 12 or the group of target communication devices 12, the responses contain the applied value/s for the requested radio resource parameter/s. If any of these values were discarded by the session and/or mobility management function 22, the response contains the appropriate cause. If the session and/or mobility management function 22 accepted the deletion request for the target communication device 12 or the group of target communication devices 12, the responses contain confirmation that the restrictions are lifted for the target communication device 12 or the group of target communication devices 12. If the session and/or mobility management function 22 rejected the request for the target communication device 12 or the group of target communication devices 12, the response/s contain an error with the corresponding cause.

Finally, in step S2011, if the initial request was rejected, the exposure function 24 sends a response with the corresponding cause. If the API invoker 30 performed a query request, the exposure function 24 replies the value/s for the requested radio resource parameter/s. If the request was accepted and further processed by the session and/or mobility management function 22, the exposure function 24 sends a response to the API invoker 30 with the applied value/s for the requested radio resource parameter/s. If the exposure function 24 discarded any of the value/s of the radio resource parameter/s that were provided in step S201, the response indicates which values were discarded and the cause. In addition, if the initial request was targeting several communication devices 12, the response sent by the exposure function 24 to the API invoker 30 may contain accumulated responses.

According to an embodiment, the PAPR of a target communication device 12 may be reduced by setting an upper bound limit of the MCS. The MCS may be determined according to 3GPP specification TS 36.213 for the evolved UMTS Terrestrial RAN (E-UTRAN) or 3GPP specification TS 38.214 for 5G New Radio (NR). These specifications define the minimum and maximum permitted MCS.

To achieve this, the exposure function 24 may expose the upper bound limit of the MCS either with exact values as defined in the specification or abstracted values (e.g. high, medium, low). The access device 14 may represent and convey the upper bound limit of the MCS by means of a Media Access Control (MAC) layer parameter or an Information element (IE) of the Radio Resource Control (RRC) protocol. The access device 14 may then take into account the upper bound limit of the MCS for scheduling of uplink resources to the target communication device(s) 12. Furthermore, the access device 14 may convey the determined MCS to the target communication device 12 via Downlink Control Information (DCI) messages for scheduling uplink resources.

According to another embodiment, the PAPR and energy consumption of a target communication device 12 may be reduced by setting an upper bound limit of the number of physical resource blocks (PRBs) or sub-PRBs.

In cellular networks, the bandwidth may be slotted into smaller physical resources as specified in 3GPP specification TS 36.211 for E-UTRAN and 3GPP specification TS 38.211 for NR. The physical resources to be used by the target communication device 12 (e.g. UE) may be represented in terms of RBs (Resource Blocks, also denoted as Physical Resource Blocks (PRBs)) or RUs (Resource Units) if sub-PRB is enabled. The PRBs are allocated within the available bandwidth following a specific resource allocation type as defined in 3GPP specification TS 36.213 for E-UTRAN and 3GPP specification TS 38.214 for NR. Besides this, for E-UTRAN the RRC layer may define an IE ce-PUSCH-MaxBandwidth (cf. 3GPP specification TS 36.331). This IE is applicable to a coverage enhancement (CE) mode A as specified in 3GPP specification TS 36.213 for E-UTRAN. Similarly, for NR the RRC layer specifies the rbg-size IE that defines the size of a resource block group (RBG). This IE is described in 3GPP specification TS 38.331. The IE rbg-size can adopt two values: configuration 1 or configuration 2 and applies to the uplink resource allocation type 0 as specified in 3GPP specification TS 38.214 for NR

To achieve the desired reduction of PAPR and/or energy consumption of a target communication device 12, the exposure function 24 may expose the upper bound limit of the number of physical resource blocks (PRBs) or sub-PRBs either with exact values as defined in the specification or abstracted values (e.g. in kHz or MHz or number of PRBs or sub-PRBs). The access device 14 may represent and convey the upper bound limit of the number of PRBs or sub-PRBs by means of a MAC layer parameter or an RRC IE, which can be further realized e.g. by means of a new MAC layer parameter or RRC IE that represents the upper bound limit of the uplink bandwidth for all or at least one resource allocation type, or by re-using the existing ce-PUSCH-MaxBandwidth IE but being applicable to all resource allocation types, or by re-using the existing rbg-size IE but being applicable to all resource allocation types. The access device 14 may then take into account the upper bound limit of the number of PRBs or sub-PRBs for the scheduling of uplink resources. It may convey the determined number of PRBs or sub-PRBs to the target communication device 12 via DCI messages for scheduling uplink resources.

According to a further embodiment, energy consumption of a target communication device 12 may be reduced by setting an upper bound limit for the number of repetitions of uplink transmissions.

Repetitions were introduced to increase coverage of LTE-M and NB-IoT as described in 3GPP specification TR 45.820 for NB-IoT and 3GPP specification TR 36.888 for LTE-M. The number of repetitions that the PUSCH can have is listed in 3GPP specification TS 36.213 for E-UTRAN. The maximum number of repetitions is determined by the RRC pusch-maxNumRepetitionCEmodeA and pusch-maxNumRepetitionCEmodeB IEs, depending on the CE mode of the communication device (e.g. UE), as described in 3GPP specification TS 36.331. These two parameters allow to set upper bound limits based on the values.

To achieve the desired reduction of PAPR and/or energy consumption of a target communication device 12, the exposure function 24 may expose the upper bound limit of the number of repetitions. The upper bound limit of the number of repetitions may be represented and conveyed by means of a MAC layer parameter or an RRC IE, which can be further realized by means of a new MAC layer parameter or a new RRC IE that represents the upper bound limit of the number of repetitions or by re-using the existing RRC IEs (e.g. the pusch-maxNumRepetitionCEmodeA IE or the pusch-maxNumRepetitionCEmodeB IE). Furthermore, the access device 14 may take into account the upper bound limit of the number of repetitions for the scheduling of uplink resources for the target communication device 12. As an example, the access device 14 may convey the determined number of repetitions to the target communication device 12 via DCI (Downlink Control Information) messages for scheduling of uplink resources.

According to another embodiment, the energy consumption of a target communication device 12 may be reduced by setting an upper bound limit stricter than the power defined in the power class the target communication device 12 belongs to.

The power classes define the maximum output power for a communication device 12 as described in 3GPP specification TS 36.101 for 4G systems and in TS 38.101 for 5G systems. Further limiting the maximum output power defined by a particular power class may reduce the energy consumption of the communication device 12. The maximum transmit power may be expressed as a new IE in a Management message (i.e. S1 SETUP REQUEST or ENB CONFIGURATION UPDATE) via the S1 interface in 4G systems as described in 36.413 or as a new IE in an Interface Management message (i.e. NG SETUP REQUEST or RAN CONFIGURATION UPDATE) via the NG interface in 5G systems as described in 38.413. In addition, the maximum transmit power may be sent to 12 by means of NAS message such as the UE configuration update as specified in 3GPP specification TS 23.502 or as a new IE in a SIB (System Information Block), RRC message or MAC CE (Control Element).

According to a still further embodiment, a maximum transmit frequency or subset of bands can reduce the time required for scanning, hence, reducing the demand of energy from the communication device; in turn, the lower the maximum transmit frequency or subset of bands the greater the coverage, reducing the required transmit power and thereby extending the battery lifetime of the communication device.

The resource block assignment is allocated following a specific resource allocation type as defined in 3GPP specification TS 36.213 for 4G and 3GPP specification TS 38.214 for 5G. An upper bound limit of the transmit frequency or a subset of bands to be used by the UE may be expressed as a new IE in a Management message (i.e. S1 SETUP REQUEST or ENB CONFIGURATION UPDATE) via the S1 interface in 4G as described in 36.413 or as a new IE in an Interface Management message (i.e. NG SETUP REQUEST or RAN CONFIGURATION UPDATE) via the NG interface in 5G as described in 38.413. In addition, the upper bound limit of the transmit frequency or a subset of bands may be sent to 12 by means of NAS message such as the UE configuration update as specified in 3GPP specification TS 23.502 or as a new IE in a SIB (System Information Block), RRC message or MAC CE (Control Element).

According to a still further embodiment, the exposure function 24 may be implemented by the SCEF.

To achieve this, the radio resource parameters may be exposed in the NpConfiguration API of the SCEF (described e.g. in the 3GPP specification TS 29.522). In this case, the radio resource parameters may be conveyed to the target communication device 12 by using a procedure for network parameter configuration via SCEF described e.g. in the 3GPP specification TS 23.682.

According to a still further embodiment, the API invoker 30 (or any other device external or internal to the CN 20) could be configured to send the radio resource parameter request in response to certain conditions or events e.g. based on at least one of the following types of information which may be available via the 4G ECEF as an example of the exposure function 24:
- information about a geographical area of the target communication device 12, which may be retrieved e.g. by using an API monitoring event (as described e.g. in 3GPP specification TS 29.122);
- information about a battery level or state of charge of the target communication device 12, which may be retrieved e.g. by an out-of-band mechanisms or from the session and/or mobility management function 22 after having been sent by the target communication device 12 to the session and/or mobility management function 22 using e.g. NAS messages or via an RRC message forwarded by the access device 14 to the session and/or mobility management function 22;
- network congestion information of the area where the target communication device 12 resides, which may be retrieved e.g. by using an API reporting network status (as described e.g. in 3GPP specification TS 29.122);
- signal quality information of the target communication device 12, which may be retrieved e.g. by using the above API reporting network status, wherein if required, additional data could be exposed via the API 240 from the session and/or mobility management function 22 and/or the RAN 10;
- information about enablement or disablement of extended coverage at the target communication device 12, which may be retrieved e.g. by using an API ECR control (as described e.g. in 3GPP specification TS 29.122);
- information about a number of repetitions at the target communication device 12, which may be retrieved e.g. from the session and/or mobility management function 22 and/or the RAN 10;
- information about a barring of the target communication device 12 from setting up a radio access connection or packet data unit session, which is known by the access device 14 and/or the session and/or mobility management function 22 and which may be retrieved by the exposure function 24; and
- Information about a velocity of target communication device 12, which may be retrieved by the exposure function 24 from the GMLC 26 (as described e.g. in 3GPP specification TS 23.271) and exposed together with the geographical area in the API monitoring event (as described e.g. in 3GPP specification TS 29.122).

According to a still further embodiment, the exposure function may be implemented by the NEF.

To achieve this, the radio resource parameters may be exposed in the Nnef_ParameterProvision service API of the NEF, described e.g. in the 3GPP specification TS 29.122. In this case, the radio resource parameters may be conveyed to the target communication device 12 by using the information flow for NEF service operations described in the 3GPP specification TS 23.502.

According to a still further embodiment, the API invoker 30 (or any other device external or internal to the CN 20) could be configured to send the radio resource parameter request in response to certain conditions or events e.g. based on at least one of the following types of information which may be available via the 5G NEF as an example of the exposure function 24:
- information about a geographical area of the target communication device 12, which may be retrieved e.g. by using the API Nnef event exposure (as described e.g. in 3GPP specification TS 29.522);
- information about a battery level or state of charge, which may be retrieved e.g. via an out-of-band mechanisms or from the session and/or mobility management function 22 after having been sent by the target communication device 12 to the session and/or mobility management function 22 using NAS messages or via an RRC message forwarded by the access device 14 to the session and/or mobility management function 22;
- network congestion information of an area where the target communication device 12 resides, which may be retrieved e.g. by using an API Nnef analytics exposure (as described e.g. in 3GPP specification TS 29.522);
- signal quality information of the target communication device 12, which may be retrieved e.g. by using the API Nnef analytics exposure (as described e.g. in 3GPP specification TS 29.522), wherein if required, additional data could be exposed via the API from an API Nnwdaf analytics at the NWDAF 25 (as described e.g. in 3GPP specification TS 23.288);
- information about enablement or disablement of extended coverage at the target communication device 12, which may be retrieved e.g. by using an API Nnef ECR control (as described e.g. in 3GPP specification TS 29.522);
- information about a number of repetitions at the target communication device 12, which may be available e.g. by retrieving data from the session and/or mobility management function (e.g. AMF) 22 or the RAN 10;
- information about a barring of the target communication device 12 from setting up a radio access connection or packet data unit session, which may be known by the access device 14 and/or the session and/or mobility management function 22 and which may be retrieved by the exposure function 24; and
- information about a velocity of the target communication device 12, which may be retrieved by the exposure function 24 from the LMF 27 (as described e.g. in 3GPP specification TS 23.273), and exposed together with the geographical area in the API Nnef event exposure (as described e.g. in 3GPP specification TS 29.522).

According to a still further embodiment, the target communication device 12 may be capable of detecting an upper bound restriction of one or more radio resource parameters and may be configured to perform at least one of reducing the amount of data to be sent, compressing the data to be sent, or postponing the communication (i.e. data transmission).

The individual processing blocks of the diagram of Fig. 2 may be implemented by discrete hardware circuit(s) such as application specific integrated circuit(s) (ASIC(s)), programmable logic array(s) (PLA(s)), field programmable gate array(s) (FPGA(s)) or the like, or by a digital signal processor (DSP) or other software-controlled processor circuit, or they may implemented based on one or more software routines used for controlling a processor or computing unit provided in the access device or the relay communication device, respectively.

To summarize, a system has been described that limits resources (e.g. reduces energy consumption and/or PAPR) of a wireless communication device by limiting communication resources for the communication device from a network function of the cellular core network.

While the invention has been illustrated and described in detail in the drawings and foregoing description, such illustration and description are to be considered illustrative or exemplary and not restrictive. The invention is not limited to the disclosed embodiments. The proposed resource control mechanism can be implemented in all types of wireless networks, e.g. it can be applied to various cellular wireless communication standards, applicable to mobile telecommunication systems like LTE, LTE-Advanced, LTE for Machines (LTE-M), Narrowband IoT (NB-IoT) or 5G, but also in some variants to any communication system where the resource parameters of a device can be remotely controlled by an API invoker and in turn further limited.

The resource limitation request from which the upper bound limit(s) is/are derived can be sent to the exposure function by any external device and via any communication or access channel or connection and/or interface.

Furthermore, there are various options or communication paths for transmitting or forwarding information about the upper bound limit(s) via cellular core network devices/functions to the scheduling function at the session and/or mobility management function or the access device. E.g., in a 4G environment from SCEF via MME to an eNB or in a 5G network environment from NEF via SMF and AMF to a gNB or from NEF via PCF and AMF to the gNB or from NEF via AMF to the gNB. These options or paths determine what interfaces and what messages could be used, since each of the interfaces between the above specific cellular core network functions have their own message types and formats. Sometimes, message attributes may be encapsulated as is when being forwarded or tunneled to another network function, but they may also be reformatted or mapped to different messages and different message attributes. That is, there may not be a direct transmission link between the cellular core network devices/functions and across the communication path from the exposure function (e.g. SCEF or NEF) to the target communication devices so that the messages for conveying the upper bound limit(s) may be reformatted several times.

The 5G wireless communication devices can be of different types of devices, e.g. mobile phones, vehicles (for vehicle-to-vehicle (V2V) communication or more general vehicle-to-everything (V2X) communication), V2X devices, IoT hubs, IoT devices, including low-power medical sensors for health monitoring, medical (emergency) diagnosis and treatment devices, for hospital use or first-responder use, virtual reality (VR) headsets, etc.

Furthermore, the invention can be applied in medical applications or connected healthcare in which multiple wireless (e.g. 4G/5G) connected sensor- or actuator nodes participate, in medical applications or connected healthcare with a wireless (e.g. 4G/5G) connected equipment, in general IoT applications involving wireless, mobile or stationary, sensor or actuator nodes (e.g. smart city, logistics, farming, etc.), in emergency services and critical communication applications, in V2X systems, in systems for improved coverage for 5G cellular networks using high-frequency (e.g. mmWave) RF, and any other application areas of 5G communication.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

A single unit or device may fulfill the functions of several items recited in the claims. The mere fact that certain measures are recited in mutually different dependent claims does not indicate that a combination of these measures cannot be used to advantage.

The described operations like those indicated in Fig. 2 can be implemented as program code means of a computer program and/or as dedicated hardware of the commissioning device or luminaire device, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus (24) of a cellular core network (20) for exposing parameter configurations of a wireless network to another device (30) external to the cellular core network (20), wherein the apparatus is configured to receive a request for a radio resource limitation for at least one target communication device (12) from the other device (30), and to select an upper bound limit for at least one radio resource parameter of the at least one target communication device (12) based on the request for radio resource limitation, according to which radio resources for the target communication device (12) are to be scheduled.

2. The apparatus of claim 1, wherein the apparatus is configured to send a request for creation, update or deletion of the selected upper bound limit of the at least one radio resource parameter to a session and/or mobility management function (22) of the cellular core network (20) or an access device (14) of the wireless network.

3. The apparatus of claim 1, wherein the apparatus is configured to expose the selected upper bound limit of the at least one radio resource parameter of the at least one communication device (12) to the other device (30).

4. The apparatus of claim 1, wherein the apparatus is configured to receive at least one condition under which to select the upper bound limit for at least one radio resource parameter of the at least one target communication devices.

5. An apparatus (30) for invoking an exposure function (24) exposing parameter configurations of a wireless network, wherein the apparatus is configured to generate a request for a radio resource limitation of at least one target communication device (12) and to send the request to the exposure function (24) to request the radio resource limitation of the at least one target communication devices (12) via the exposure function (24), and wherein the request for radio resource limitation indicates at least one radio resource parameter according to which radio resources for the at least one target communication device (12) are to be scheduled.

6. The apparatus of claim 5, wherein the apparatus is configured to send the request for the radio resource limitation in response to at least one of a geographical area in which the target communication device (12) resides, a detection of at least one of the remaining battery level of the target communication device (12) being below a predetermined threshold, a network congestion in the coverage area of the target communication device (12) being above a predetermined threshold, a signal quality parameter of the target communication device (12) being below a predetermined threshold, an extended coverage mode being enabled or disabled at the target communication device (12), a number of repetitions at the target communication device (12) or communication failures that occurred in the radio access network being above a predetermined threshold, a barring of the target communication device (12) from setting up a radio access connection or packet data unit session, and the target communication device (12) moving at a velocity above a predetermined threshold.

7. The apparatus of claim 5, wherein the apparatus is configured to generate the request for the radio resource limitation in the form of a query, a creation, an update or a deletion of the at least one radio resource parameter for the at least one target communication device (12).

8. An apparatus (14, 22) for scheduling radio resources for at least one target communication device (12) of a wireless network, wherein the apparatus is configured to receive a request for upper bound limits of at least one radio resource parameter of the at least one target communication device (12) from an exposure function (24) via a cellular core network (20) of the wireless network, to validate resulting values of the at least one radio resource parameters requested by the exposure function (24), and to decide about discarding resulting values of the at least one radio resource parameters requested by the exposure function (24) or rejecting the request received from the exposure function (24) or conveying information about the upper bound limits to the at least one target communication devices (12), based on a result of the validation.

9. The apparatus of claim 8, wherein the apparatus is configured to schedule limited radio resources in accordance with the received request for upper bound limits for the at least one target communication device (12).

10. An apparatus for controlling at least one radio resource parameter at a communication device (12) of a wireless network, wherein the apparatus is configured to receive upper bound limits of the at least one radio resource parameter from an exposure function (24) via a cellular core network (20) of the wireless network, to detect a restriction of the at least one radio resource parameter based on the received upper bound limits, and to reduce or compress uplink data to be transmitted or postpone transmission of uplink data in accordance with the detected restriction.

11. The apparatus of claim 1, 5, 8 or 10, wherein the at least one radio resource parameter corresponds to a modulation coding scheme, a number of physical resource blocks, PRBs, or sub-PRBs, a transmit power, a transmit frequency or subset of bands, or a number of repetitions of uplink transmissions.

12. A method of limiting radio resources of at least one target communication device (12) of a wireless network, wherein the method comprises receiving a request for a radio resource limitation for the at least one target communication device (12) from another device (30) external to a cellular core network (20) of the wireless network, and selecting an upper bound limit for at least one radio resource parameter of the at least one target communication device (12) based on the request for radio resource limitation, according to which radio resources for the target communication device (12) are to be scheduled.

13. A method of limiting radio resources of at least one target communication device (12) of a wireless network, wherein the method comprises generating a request for a radio resource limitation of the at least one target communication device (12) and sending the request to an exposure function (24) of the wireless network to request the radio resource limitation of the at least one target communication device (12) via the exposure function (24), and wherein the request for radio resource limitation indicates at least one radio resource parameter according to which radio resources for the at least one target communication device (12) are to be scheduled.

14. A method of limiting radio resources of at least one target communication device (12) of a wireless network, wherein the method comprises receiving a request for upper bound limits of at least one radio resource parameter of the at least one target communication device (12) from an exposure function (24) via a cellular core network (20) of the wireless network, validating resulting values of the at least one radio resource parameters requested by the exposure function (24), and deciding about discarding resulting values of the at least one radio resource parameters requested by the exposure function (24) or rejecting the request received from the exposure function (24) or conveying information about the upper bound limits to the at least one target communication devices (12) based on a result of the validation.

15. A method of limiting radio resources of at least one target communication device (12) of a wireless network, wherein the method comprises receiving upper bound limits of the at least one radio resource parameter from an exposure function (24) via a cellular core network (20) of the wireless network, detecting a restriction of the at least one radio resource parameter based on the received upper bound limits, and reducing or compressing uplink data to be transmitted or postponing transmission of uplink data in accordance with the detected restriction.
